# Europäisches Patentamt

# European Patent Office

# Office européen des brevets

(19)

(11) Veröffentlichungsnummer: **0 112 522**
**A2**

(12) **EUROPÄISCHE PATENTANMELDUNG**

(21) Anmeldenummer: **83112234.6**

(22) Anmeldetag: **06.12.83**

(51) Int. Cl.³: **C 08 G 8/04, C 08 G 8/28**

(30) Priorität: **24.12.82 DE 3248088**

(43) Veröffentlichungstag der Anmeldung: **04.07.84 Patentblatt 84/27**

(84) Benannte Vertragsstaaten: **AT BE CH FR GB IT LI LU NL SE**

(71) Anmelder: **BROWN, BOVERI & CIE Aktiengesellschaft, Kallstadter Strasse 1, D-6800 Mannheim 31 (DE)**

(72) Erfinder: **Weddigen, Gert, Dr., Dipl.-Chem., Max-Reger-Strasse 25, D-6900 Heidelberg (DE)**
Erfinder: **Huber, Robert, Dr. Dipl.-Phys., Franklinstrasse 14, D-6834 Ketsch (DE)**
Erfinder: **Schmidt, Birgit, Dipl.-Ing., Karl-Clemm-Strasse 29, D-6700 Ludwigshafen (DE)**
Erfinder: **Schneider, Hartmut, Eisenbahnstrasse 15, D-6831 Plankstadt (DE)**

(74) Vertreter: **Kempe, Wolfgang, Dr. et al, c/o Brown, Boveri & Cie AG Postfach 351, D-6800 Mannheim 1 (DE)**

(54) **Verfahren zur Herstellung eines Polymers.**

(57) Die Erfindung bezieht sich auf ein Verfahren zur Herstellung eines Polymers mit Triaromatmethaneinheiten als Grundbausteine, dessen elektrische Leitfähigkeit durch die Bildung von Charge-Transfer-Komplexen erzielt wird. Erfindungsgemäß werden dem Polymer bei seiner Herstellung Elektronenakzeptoren und/oder Elektronendonatoren beigemischt. Als Elektronenakzeptoren eignen sich Jod, Schwefeltrioxid ($SO_3$) und Eisenchlorid ($FeCl_3$). Als Elektronendonator kommt Natrium in Frage.

EP 0 112 522 A2

0112522

BROWN, BOVERI & CIE AKTIENGESELLSCHAFT
Mannheim                                08. Dez. 1982
Mp.-Nr. 687/82                          ZPT/P1-Kr/Be

## Verfahren zur Herstellung eines Polymers

Die Erfindung bezieht sich auf ein Verfahren zur Herstellung eines Polymers gemäß dem Oberbegriff des Patentanspruches 1.

Solche Polymere sind zur Herstellung von Gehäusen und Schutzüberzügen von elektrischen Geräten sowie zur Beschichtung von Verkleidungselementen für Wände und Möbel geeignet.

In der Elektrotechnik besteht ein großer Bedarf an Polymeren, deren spezifische elektrische Leitfähigkeit bezogen auf den Querschnitt der Kunstharzmasse innerhalb eines Bereiches, in dem die Kunstharzmasse noch als Isolator wirkt, zwischen $10^{-14}$ und $10^{-7}$ (Ohm x cm)$^{-1}$ frei gewählt werden kann. Hierdurch ist es möglich, noch eine ausreichende Isolierwirkung aufrecht zu erhalten, und gleichzeitig statische Aufladungen vermeiden. Diese Polymere können sowohl als antistatische Oberflächenbeschichtung verwendet werden, als auch zur Isolierung

687/82 2 0112522

zwischen metallischen Seiten unterschiedlichen Potentials dienen. Im letzteren Fall ist die Volumenleitfähigkeit groß genug, um elektrische Überschläge auf der
Oberfläche zu vermeiden, welche durch leitfähige Verschmutzungen hervorgerufen werden.

Aus der GB-PS 10 67 260 ist ein elektrisch leitendes,
synthetisches Polymer bekannt. Es handelt sich um ein
stickstoffhaltiges Polymer, bei dem die elektrische
Leitfähigkeit durch die Bildung von Charge-Transfer-Komplexen erzielt wird.

Des weiteren sind Polymere bekannt, bei denen eine
erhöhte Elektronenleitfähigkeit dadurch erzielt wird,
daß ihrem Basismaterial elektronenleitende Füllstoffe
wie Kupfer, Gold, Platin, Kohle oder Graphit beigemischt
werden. Kunstharze mit diesen Zusätzen weisen den
Nachteil auf, daß bei geringem Anteil dieser Füllstoffe
keine Erhöhung der Leitfähigkeit erfolgt, bei einer
Vergrößerung des Zusatzes jedoch die Leitfähigkeit
derart sprunghaft ansteigt, so daß sie über das gewünschte Maß hinaus anwächst, und die isolierenden Eigenschaften verloren gehen.

Polymere ohne Zusätze weisen eine elektrische Volumenleitfähigkeit von $10^{-15}$ bis $10^{-18}$ (Ohm x cm)$^{-1}$ auf. Um
diese Polymere sinnvoll zur Herstellung von Gehäusen und
Überzügen von elektrischen Geräten verwenden zu können,
sollten sie eine elektrische Volumenleitfähigkeit
aufweisen, die etwa zwischen $10^{-7}$ und $10^{-14}$ (Ohm x cm)$^{-1}$
gewählt werden kann.

Der Erfindung liegt deshalb die Aufgabe zugrunde, ein
Verfahren anzugeben, mit dem die elektrische Volumenleitfähigkeit bei einem Kunstharz mit Triaromatmethaneinheiten als Grundbausteine durch die Bildung von Charge-Transfer-Komplexen auf einen definierten Wert eingestellt werden kann.

Diese Aufgabe wird erfindungsgemäß durch die kennzeichnenden Merkmale des Patentanspruches 1 gelöst.

Die Bildung von Charge-Transfer-Komplexen in einem Polymer, dessen Grundbausteine aus Triaromatmethaneinheiten bestehen, kann durch die Zugabe von Elektronenakzeptoren vor oder nach der Herstellung des Polymers erreicht werden. Charge-Transfer-Komplexe bilden sich in diesem Polymer ebenfalls aus, wenn bei der Herstellung den das Polymer bildenden Ausgangsstoffen Elektronendonatoren zugesetzt werden. Die Zugabe von Elektronenakzeptoren und Elektronendonatoren zu dem Basismaterial des Polymer trägt ebenfalls zur Bildung von Charge-Transfer-Komplexen bei.

Elektronenakzeptoren können, z.B. Stoffe sein, die von anderen Molekülen oder Atomen Elektronen besonders leicht aufnehmen können. Bei Elektronendonatoren handelt es sich um Stoffe, die Elektronen besonders leicht an andere Atome oder Moleküle abgeben können.

Bei einem Polymer, dessen Grundbausteine Triaromatmethaneinheiten sind, handelt es sich ebenfalls um einen neutralen Stoff. Wird das Polymer in kleinen Volumeneinheiten betrachtet, so treten dort sowohl funktionelle Gruppen mit einer besonders hohen Elektronendichte und an einer anderen Stelle solche Gruppen mit geringer Elektronendichte auf. Zu den Gruppen mit hoher Elektronendichte gehören Kohlenstoffdoppelbindungen, Kohlenstoffdreifachbindungen, NH-Gruppen, CN-Dreifachbindungen, Kohlenstoffbindungen in Aromaten und Heterocyclen sowie CN-Bindungen in Heterocyclen, OH-Gruppen, SH-Gruppen, Äther- und Thioäthergruppen, Jod, Stickstoff, Einfach- oder Mehrfachbindungen und schließlich Sauerstoff- und Schwefelbindungen. Zu den Gruppen, die in einer polymeren organischen Verbindung eine geringe Elektronendichte bzw. Elektronenmangel haben, gehören Kohlenstoffdoppelbindungen, die in ihrer beider Nachbarschaft folgende elektronenabziehenden Gruppierungen aufweisen, wie beispielsweise Halogen-Gruppen, Pseudohalogen-Gruppen, Carbonyl-Gruppen, Nitro-Gruppen, OH-Gruppen, SH-Gruppen, CS-Gruppen. Ferner gehört hierzu der Schwefel in Sulfoniumsalzbindungen, der Sauerstoff in Oxoniumsalzbindungen und der Stickstoff in Amoniumsalzbindungen.

Gemäß der vorliegenden Erfindung wird nun die Volumenleitfähigkeit des Polymers mit Triaromatmethaneinheiten dadurch erhöht, daß analog zur Bildung von Charge-Transfer-Komplexen die mit Elektronenunterschuß ausgestatteten funktionellen Gruppen des Polymers mit zugesetzten Elektronendonatormolekülen umgesetzt werden. Ebenso ist es möglich, die mit Elektronenüberschuß ausgestatteten funktionellen Gruppen des Polymers mit Elektronenakzeptormolekülen umzusetzen. Im Polymer entstehen dann Charge-Transfer-Komplexe, deren Donatorund/oder Akzeptoranteil jeweils ein Bestandteil des Polymers ist. Analog zu der Zahl der so integrierten Charge-Transfer-Komplexe entstehen in dem Polymer frei bewegliche Elektronen. Bei einer Konzentrationserhöhung des Zusatzes, insbesondere der Zugabe von Elektronenakzeptoren und/oder Elektronendonatoren erhöht sich die Zahl der integrierten Charge-Transfer-Komplexe, falls das Polymer noch über geeignete nicht abreagierte funktionelle Gruppen verfügt. Dabei erhöht sich auch die Zahl der frei beweglichen Elektronen und somit die Volumenleitfähigkeit in Abhängigkeit von der Konzentration des bzw. der beigemischten Zusätze. Mit einer Zugabe von 20 Gew.% Schwefeltrioxid ($SO_3$) kann eine elektrische Leitfähigkeit von $2 \times 10^{-5}$ (Ohm x cm)$^{-1}$ erzielt werden. Mit einer Beimischung von Jod, die bis 50 Gew.% betragen kann, läßt sich sogar eine elektrische Leitfähigkeit von $3 \times 10^{-4}$ (Ohm x cm)$^{-1}$ erzielen. Die angegebenen Gewichtsmengen beziehen sich auf das Gesamtgewicht des zu bildenden Polymers.

Natrium wirkt in dem Polymer als Elektronendonator. Durch einen Zusatz von 1 bis 60 Gew.% vorzugsweise 10 Gew.% Natrium, kann eine Leitfähigkeit von $5 \times 10^{-14}$ (Ohm x cm)$^{-1}$ erreicht werden. Alle Gewichtsangaben beziehen sich auf das Gesamtgewicht des Polymers.

Vor der Dotierung mit Natrium werden alle OH-Gruppen des Polymers vorzugsweise mit Isocyanat umgesetzt.

Das Polymer selbst kann bei der Polykondensation mindestens eines aromatischen Aldehyds und wenigstens einer aromatischen Ringverbindung gebildet werden, die wenigstens eine funktionelle Gruppe aufweist, welche in der aromatischen Ringverbindung die Elektronendichte erhöht und damit den elektrophilen Angriff begünstigt.

Das Polymer kann insbesondere durch die Polykondensation von Bisphenol-A und 4-Dimethylaminobenzaldehyd gebildet werden. Ein synthetisches Polymer mit Triaromatmethaneinheiten als Grundbausteine läßt sich auch durch eine Polykondensation von Bisphenol-A und para-Anisaldehyd herstellen. Die Bildung eines solchen Polymers kann auch durch eine katalytische Reaktion erreicht werden, bei der zwei- und/oder dreifache mit Aromaten substituierte Methane zur Reaktion gebracht werden.

Erfindungsgemäß werden die Elektronenakzeptoren und/oder Elektronendonatoren, welche für die Bildung der Charge-Transfer-Komplexe erforderlich sind, den oben beschriebenen Basisstoffen nach der Polykondensation beigemischt.

Erfindungsgemäß kann das synthetische Polymer, bei dem die elektrische Volumenleitfähigkeit in einem Bereich von $2 \times 10^{-15}$ bis $3 \times 10^{-4}$ (Ohm x cm)$^{-1}$ frei wählbar ist, auch bei der Polykondensation mindestens eines aromatischen Aldehyds und wenigstens eines aromatischen Ringsystems gebildet werden, derart, daß in dem Ringsystem mindestens zwei H-Atome durch mindestens zwei funktionelle Gruppen ersetzt werden, durch welche die Elektronendichte an mindestens zwei Stellen im Ringsystem erhöht wird.

Das Polymer kann ebenfalls durch die Polykondensation eines aromatischen Aldehyds und mindestens eines Ringsystems gebildet werden, welches 2 OH-Gruppen aufweist. Anstelle eines Ringsystems mit 2 OH-Gruppen kann auch ein aromatisches Ringsystem verwendet werden, welches 2 SH-Gruppen aufweist. Das synthetische Polymer läßt sich auch bei der Polykondensation eines aromatischen Aldehyds und einer aromatischen Ringverbindung herstellen, welche 2 Aminogruppen enthält. Anhand des nachfolgenden Beispiels wird die Herstellung des synthetischen Polymers mit einer elektrischen Volumenleitfähigkeit von $2 \times 10^{-5}$ (Ohm x cm)$^{-1}$ beschrieben, wobei das für die Polykondensation verwendete Basismaterial aus Benzaldehyd und Resorcin besteht.

Für die Herstellung einer kleineren Menge dieses Polymers mit der oben beschriebenen Leitfähigkeit werden 6 g Resorcin (ungefähr 0,06 mol) und 6 g Benzaldehyd (ungefähr 0,06 mol) in 100 ml Aceton gelöst. Die Reaktionslösung wird anschließend gerührt und gleichzeitig mit Hilfe von Eis gekühlt. Im Laufe von 10 Minuten werden 0,6 ml konzentrierte Salzsäure, die in 5 ml Aceton gelöst sind, der Reaktion zugeführt. Nach einer Reaktionszeit von 51 Minuten wird mit Hilfe eines Rotationsverdampfers das Aceton und die Salzsäure bei $45^0$ C ausgedampft. Restliche Monomere werden abgetrennt indem das Produkt zwei Stunden lang bei $70^0$ C im Vakuumtrokkenschrank aufbewahrt wird. Die Ausbeute des Reaktionsproduktes beträgt etwas mehr als 90 % bezogen auf die verwendete Ausgangsstoffmenge. Das so hergestellte Polymer ist in Methylformamid, Tetrahydrofuran und Aceton löslich. Sein Schmelzpunkt kann zwischen 90 und $300^0$ C eingestellt werden. Das so gewonnene Reaktionsprodukt wird in Aceton mit 20 Gew.% $SO_3$ oder $H_2SO_4$ bei $50^0$ C innerhalb 1 h umgesetzt, wobei die Menge des verwendeten Acetons das 10fache Volumen des Reaktionsproduktes aufweist. Das so hergestellte Polymer weist eine spezifische elektrische Leitfähigkeit von $2 \times 10^{-5}$ (Ohm x cm)$^{-1}$ auf.

ANSPRÜCHE

1. Verfahren zur Herstellung eines Polymers mit Triaromatmethaneinheiten als Grundbausteine, dessen elektrische Leitfähigkeit durch die Bildung von Charge-Transfer-Komplexen erzielt wird, dadurch gekennzeichnet, daß dem synthetischen Polymer während oder nach seiner Herstellung Elektronendonatoren und/oder Elektronenakzeptoren zur Bildung von Charge-Transfer-Komplexen zugefügt werden.

2. Verfahren nach Anspruch 1, dadurch gekennzeichnet, daß dem Polymer während seiner Herstellung Jod, Schwefeltrioxid ($SO_3$) oder Eisenchlorid ($FeCl_3$) als Elektronenakzeptor beigemischt wird.

3. Verfahren nach einem der Ansprüche 1 oder 2, dadurch gekennzeichnet, daß dem Polymer bis 150 Gew.% Jod bezogen auf das Gesamtgewicht des Polymers als Elektronenakzeptor beigemischt werden.

4. Verfahren nach Anspruch 1 oder 2, dadurch gekennzeichnet, daß dem Polymer 20 Gew.% Schwefeltrioxid ($SO_3$) bezogen auf das Gesamtgewicht des Polymers als Elektronenakzeptor beigemischt wird.

5. Verfahren nach Anspruch 1 oder 2, dadurch gekennzeichnet, daß dem Polymer 10 bis 50 Gew.% Eisenchlorid bezogen auf das Gesamtgewicht des Polymers als Elektronenakzeptor beigemischt wird.

6. Verfahren nach Anspruch 1, dadurch gekennzeichnet, daß dem Polymer während seiner Herstellung 1 bis 60, vorzugsweise 10 Gew.% Natrium, bezogen auf das Gesamtgewicht des Polymers als Elektronendonator, beigemischt wird.

7. Verfahren nach Anspruch 6, dadurch gekennzeichnet, daß alle OH-Gruppen vor der Dotierung mit Natrium mit Isocyanat umgesetzt werden.